# EUROPEAN PATENT SPECIFICATION

(11) **EP 3 250 951 B1**
(45) Date of publication and mention of the grant of the patent: **07.06.2023**
(21) Application number: 16709483.8
(22) Date of filing: 01.02.2016
(51) Int. Cl.: G02B 5/28, G02B 26/02

(54) **ATTENUATOR**
DÄMPFER
ATTÉNUATEUR

(30) Priority: 30.01.2015 GB 201501611
(43) Date of publication of application: 06.12.2017
(73) Proprietor: Edinburgh Biosciences Limited, Livingstone EH54 7DP (GB)
(72) Inventor: SMITH, Desmond, Livingstone EH54 7DP (GB)
(74) Representative: Duffy, Claudia Magdalena
(86) International application number: PCT/GB2016/050223
(87) International publication number: WO 2016/120644

(56) References cited:
- WO-A2-03/005501
- CN-Y- 2 259 622
- DE-U1-202006 004 026
- US-A- 4 632 512
- US-A- 4 747 673
- US-A- 4 778 263
- US-A1- 2006 044 653
- US-A1- 2008 285 130
- US-A1- 2010 046 076
- US-A1- 2012 236 534
- US-A1- 2012 293 868
- Miller D. A. B. ET AL: "Variable attenuator for Gaussian laser beams", Applied Optics, vol. 17, no. 23, 1 December 1978 (1978-12-01), page 3804, XP055927307, US ISSN: 0003-6935, DOI: 10.1364/AO.17.003804 Retrieved from the Internet: URL:https://opg.optica.org/DirectPDFAccess /4350DD4A-CD2E-4F51-AD3EE0430186078B_73663 /ao-17-23-3804.pdf?da=1&id=73663&seq=0&mob ile=no>

## Description

### Field of the Invention

The present invention relates to an attenuator for a light source that has a monochromatic output, and in particular a variable attenuator for such a source.

### Background of the Invention

Attenuators are often used in optical systems to allow the power of laser beams to be varied and/or controlled. For high power lasers, known attenuators tend to be bulky, complex, and generally include multiple parts.

### Summary of the Invention

According to the present invention, there is provided a laser attenuator for attenuating substantially single wavelength light, laser attenuator comprising multiple layers of optical material arranged to provide a variable attenuation level as defined by claim 1.

The layers may comprise multiple layers of material that have different refractive indices, for example multiple thin layers of material that have different refractive indices. The attenuator may have multiple thin layers of material that have different refractive indices.

The layers may comprise variable thickness interference layers along the lateral direction. The attenuator may have variable thickness interference layers along the lateral direction.

The attenuator can be designed to attenuate the laser beam linearly with distance along the wedge or alternatively on a log scale.

The attenuator may comprise a transparent substrate such as glass, quartz or the like.

The number of layers can be different in different embodiments, for example between 10 and 100 layers, optionally 50 layers. The layers may comprise alternating higher and lower refractive index layers.

The layers may comprise reflective elements. The layers may provide reflectivity that varies along the lateral direction. The layers may comprise variable reflectivity layers in which the reflectivity varies with the lateral position. Each layer, or at least some of the layers, may comprise an optical coating, for example on a substrate, the optical coating(s) being selected to provide desired reflectivity and/or other optical properties. The layers may be such as to provide a desired variation of transmissivity of the laser attenuator with lateral position, for example a substantially linear variation of transmissivity with lateral position or a substantially logarithmic variation of transmissivity with lateral position. The optical coatings may be selected to provide the desired variation of transmissivity with lateral position.

The attenuator is movable in a direction that crosses the optical axis, for example perpendicular to the optical axis, thereby to vary the level of attenuation.

An attenuator actuator is provided for moving the attenuator to vary the level of attenuation. The actuator may be automatically actuated. The actuator may, for example, comprise a worm and wheel and a stepper motor.

### Brief Description of the Drawings

Various aspects of the invention will now be described by way of example only, and with reference to the accompanying drawings, of which:
Figure 1 is schematic representation of a variable attenuator for a monochromatic light source, and
Figure 2 shows a transmission curve as a function of position along the length of a wedge type interference attenuator.

### Detailed Description of the Drawings

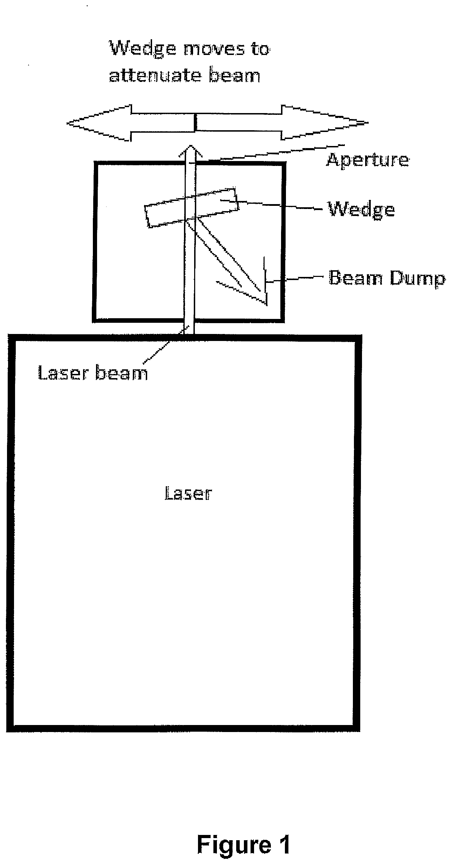

Figure 1 shows a laser system that has laser for outputting a single wavelength output beam and a laser attenuator positioned along the optical path of the laser output beam. The laser attenuator is a wedge type interference device that has multiple layers of optical material.

The attenuator is located within a housing, in which a beam dump is provided for absorbing light reflected from the attenuator. An input is formed through one side of the housing to allow the laser beam to propagate along its optical path toward the interference attenuator. An output is formed through an opposite side of the housing to allow the attenuated laser beam to leave the housing.

The wedge interference device has multiple layers of variable thickness along the lateral direction. The interference layers can be designed to attenuate linearly with distance along the wedge or alternatively on a log scale.

The wedge type interference attenuator has a right-angled triangle cross section. The cross section has right angle defined by a long edge and a short edge, and an angled edge that extends between the long and short edges. The attenuator is positioned across the optical beam path so that its angled edge faces the optical beam, and its long edge is tilted slightly away from perpendicular to the beam path. Tilting of the wedge in this way allows light reflected from the attenuator to be diverted to the beam dump.

The attenuator is movable across the optical beam path. Movement can be achieved using a hand actuated mechanical drive or under electrical control. In either case, the attenuator can be calibrated as a function of position.

In use, the interference attenuator attenuates the laser beam as it passes through by reflecting some of the single wavelength light. Light reflected from the interference attenuator is diverted to the beam dump. The level of attenuation can be varied by moving the wedge shaped device across the optical beam path, so that the laser beam is incident at different positions along the angled face.

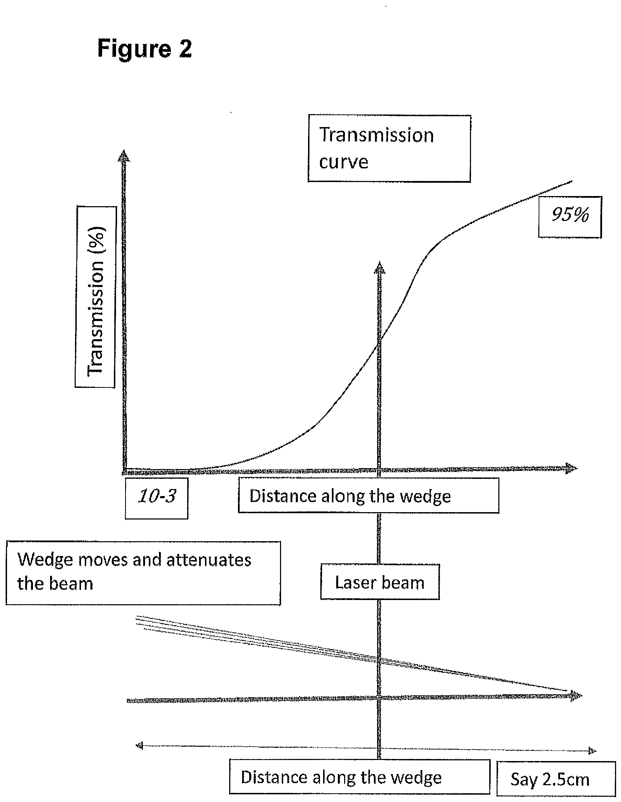

Figure 2 shows a transmission curve as a function of position along the length of the wedge type attenuator at an example wavelength of 800nm. This shows that the transmission varies from roughly 95% at one end of the wedge to around 0% at the other. This demonstrates that the attenuator can be used to provide a variable level of attenuation. The attenuation level can be selected merely by varying the position of the attenuator relative to the laser beam.

A skilled person will appreciate that variations of the disclosed arrangements are possible without departing from the invention.

In some embodiments the layers may comprise variable reflectivity layers in which the reflectivity varies with position along the lateral direction.

The layers in some embodiments each comprise an optical coating, the optical coating being deposited or otherwise formed on a substrate and being selected to provide desired reflectivity and/or other optical properties.

The layers may be such as to provide a desired variation of transmissivity of the laser attenuator with lateral position, for example a substantially linear variation of transmissivity with lateral position or a substantially logarithmic variation of transmissivity with lateral position.

For example, in some embodiments the layers are such as to provide a linear variation of transmissivity between 100% and 1%, or between any other desired values. In other embodiments, in which a substantially logarithmic variation of transmissivity with lateral position is provided the transmissivity may, for example, vary by a factor of 0.0001 or more (e.g. from around 100% to around 0.01%). Such variation of transmissivity may, for example, be particularly suitable when the attenuator is used to attenuate a high power laser beam, for example a laser beam having peak power in the MW range, for instance 1 MW to 100MW, for optical alignment or other purposes.

The number of layers can be different in different embodiments, for example between 10 and 100 layers, optionally 50 layers.

The above description of a specific embodiment is made by way of example only and not for the purposes of limitations. It will be clear to the skilled person that minor modifications may be made without significant changes to the operation described.

## Claims

1. A laser attenuator for attenuating substantially single wavelength light, the laser attenuator comprising multiple layers of optical material arranged to provide a variable attenuation level, wherein the laser attenuator is wedge shaped and has a right-angled triangle cross section whose right angle is defined by a long edge and a short edge, and comprises an angled face that extends between the long and short edges, and wherein the laser attenuator is located within a housing in which a beam dump is provided for absorbing light reflected from the laser attenuator, the laser attenuator further comprising means for moving the laser attenuator across an optical path of a laser beam so that the laser beam is incident at different positions along the angled face and the long edge is tilted slightly away from perpendicular to the optical path of the laser beam to allow light reflected from the laser attenuator to be diverted to the beam dump.

2. A laser attenuator as claimed in claim 1 wherein the multiple layers comprise variable thickness interference layers along a lateral position of the laser attenuator across the optical path of the laser beam.

3. A laser attenuator as claimed in claim 1 or claim 2 comprising a transparent substrate such as glass, quartz or the like.

4. A laser attenuator as claimed in claim 1 wherein the means for moving the laser attenuator comprise a worm and wheel and a stepper motor.

## Patentansprüche

1. Laserdämpfer zum Dämpfen von Licht mit im Wesentlichen einer einzigen Wellenlänge, wobei der Laserdämpfer mehrere Schichten aus optischem Material umfasst, die angeordnet sind, um einen variablen Dämpfungspegel bereitzustellen, wobei der Laserdämpfer keilförmig ist und einen rechtwinkligen dreieckigen Querschnitt aufweist, dessen rechter Winkel durch eine lange Kante und eine kurze Kante definiert ist, und eine abgewinkelte Fläche umfasst, die sich zwischen der langen und der kurzen Kante erstreckt, und wobei sich der Laserdämpfer in einem Gehäuse befindet, in dem eine Strahlfalle zum Absorbieren von Licht bereitgestellt ist, das von dem Laserdämpfer reflektiert wird, wobei der Laserdämpfer ferner Mittel zum Bewegen des Laserdämpfers über einen optischen Weg eines Laserstrahls umfasst, sodass der Laserstrahl an unterschiedlichen Positionen entlang der abgewinkelten Fläche einfällt und die lange Kante leicht von der Senkrechten weg zu dem optischen Weg des Laserstrahls geneigt ist, um zu ermöglichen, dass Licht, das von dem Laserdämpfer reflektiert wird, zu der Strahlfalle abgelenkt wird.

2. Laserdämpfer nach Anspruch 1, wobei die mehreren Schichten Interferenzschichten variabler Dicke entlang einer seitlichen Position des Laserdämpfers quer zu dem optischen Weg des Laserstrahls umfassen.

3. Laserdämpfer nach Anspruch 1 oder Anspruch 2, umfassend ein transparentes Substrat, wie etwa Glas, Quarz oder dergleichen.

4. Laserdämpfer nach Anspruch 1, wobei die Mittel zum Bewegen des Laserdämpfers eine Schnecke und ein Rad und einen Schrittmotor umfassen.

## Revendications

1. Atténuateur de laser destiné à atténuer une lumière de longueur d'onde sensiblement unique, l'atténuateur de laser comprenant de multiples couches de matériau optique agencées pour fournir un niveau d'atténuation variable, ledit atténuateur de laser étant en forme de coin et comportant une section transversale en triangle rectangle dont l'angle droit est défini par un bord long et un bord court, et comprenant une face inclinée qui s'étend entre les bords long et court, et ledit atténuateur de laser étant situé à l'intérieur d'un boîtier dans lequel une décharge de faisceau est prévue pour absorber la lumière réfléchie par l'atténuateur de laser, l'atténuateur de laser comprenant en outre un moyen pour déplacer l'atténuateur de laser à travers un chemin optique d'un faisceau laser afin que le faisceau laser soit incident au niveau de différentes positions le long de la face inclinée et que le bord long soit légèrement incliné à l'opposé de la perpendiculaire au chemin optique du faisceau laser pour permettre à la lumière réfléchie par l'atténuateur de laser d'être déviée vers la décharge de faisceau.

2. Atténuateur de laser selon la revendication 1, lesdites multiples couches comprenant des couches d'interférence d'épaisseur variable le long d'une position latérale de l'atténuateur de laser à travers le chemin optique du faisceau laser.

3. Atténuateur de laser selon la revendication 1 ou la revendication 2, comprenant un substrat transparent tel que le verre, le quartz ou similaire.

4. Atténuateur de laser selon la revendication 1, ledit moyen pour déplacer l'atténuateur de laser comprenant une vis sans fin et une roue et un moteur pas à pas.
